# EUROPÄISCHE PATENTANMELDUNG

(11) **EP 1 903 661 A2**
(43) Veröffentlichungstag der Anmeldung: **26.03.2008**
(21) Anmeldenummer: 07117051.8
(22) Anmeldetag: 24.09.2007
(51) Int. Cl.: H02J 13/00

(54) **Kabellose Schalt- und Eingabevorrichtung**

(30) Priorität: 25.09.2006 DE 102006045181
(71) Anmelder: SIEMENS AKTIENGESELLSCHAFT, 80333 München (DE)
(72) Erfinder: Bösnecker, Robert, 84030, Ergolding (DE)

(57) **Zusammenfassung**

Eine kabellose Schalt- und Eingabevorrichtung (1) setzt sich aus einem Eingabeelement (2) und einem von diesem galvanisch getrennten Auswertesystem (3) zusammen, wobei das Auswertesystem (3) einen Sensor (15, 27) aufweist, welcher dafür ausgebildet ist, einen manuell verstellbaren Zustand des Eingabeelements (2) zu detektieren.

## Beschreibung

Die Erfindung betrifft eine kabellose Schalt- und Eingabevorrichtung, welche ein manuell betätigbares Eingabeelement und ein mit diesem zusammenwirkendes Auswertesystem umfasst. Weiter betrifft die Erfindung ein Verfahren zur Detektion des Schaltzustands eines Eingabeelements, welches von einem Auswertesystem galvanisch getrennt ist.

Eine drahtlose Schaltvorrichtung ist beispielsweise aus der DE 297 24 466 U1 bekannt. Diese insbesondere für die häusliche Elektroinstallation vorgesehene Schaltvorrichtung umfasst einen Empfängerschalter mit einer Empfangselektronik und einem Schaltwerk sowie einen Senderschalter, der beispielsweise als Taste oder als Wippe ausgebildet ist. Während der Empfängerschalter an das Stromnetz angeschlossen ist, erfolgt die Energieversorgung des Senderschalters mittels einer Batterie, einer Solarzelle oder einer Kombination von Solarzelle und Batterie.

Der Erfindung liegt die Aufgabe zugrunde, eine gegenüber dem Stand der Technik verbesserte, insbesondere zuverlässigere sowie von den Umgebungsbedingungen weitestgehend unabhängige, kabellose Bedienung von Geräten zu ermöglichen.

Diese Aufgabe wird erfindungsgemäß gelöst durch eine kabellose Schalt- und Eingabevorrichtung mit den Merkmalen des Anspruchs 1 sowie durch ein Verfahren zur Detektion des Schaltzustands eines Eingabeelements mit den Merkmalen des Anspruchs 15. Die nachfolgenden Ausführungen beziehen sich, soweit anwendbar, sowohl auf das Verfahren als auch auf die Schalt- und Eingabevorrichtung.

Die Vorrichtung umfasst ein Eingabeelement und ein von diesem galvanisch getrenntes Auswertesystem mit einem Sensor, der einen manuell verstellbaren Zustand des Eingabeelements detektiert. Hierbei liegt eine kabellose Verbindung zwischen dem Eingabeelement und dem Auswertesystem vor, da der Sensor dafür eingerichtet ist, durch die elektromagnetischen oder mechanischen Eigenschaften des Eingabeelements eine Zustandsänderung des Letzteren zu erfassen.

Das Eingabeelement weist vorzugsweise ein schwingfähiges System auf. Die Änderung des Zustands des Eingabeelements kann somit auf einfache Art und Weise durch ein Anregen bzw. ein Unterbrechen einer Schwingung des schwingfähigen Systems oder durch eine Änderung seiner Schwingfrequenz detektiert werden. Die Schwingfrequenz kann hierbei beispielsweise die Schwingfrequenz eines Schwingkreises sein. Alternativ oder Ergänzend kann eine mechanische Schwingung hervorgerufen werden, bei der ein akustisches Schwingsignals entsteht.

Bevorzugt ist das schwingfähige System dafür ausgebildet, durch Betätigen des Eingabeelements zu schwingen. Somit wird das Vorhandensein eines vom Sensor empfangenen Schwingungssignals, insbesondere eines Signals einer vorgegebenen Schwingfrequenz, vom Auswertesystem als eine Betätigung des Eingabeelements interpretiert.

Die Erfassung des zu detektierenden Zustands, insbesondere Schaltzustands, des Eingabeelements durch das von diesem räumlich getrennte Auswertesystem erfordert keine eigene Energieversorgung des Eingabeelements. In vorteilhafter Ausgestaltung weist daher das Eingabeelement keine Batterie oder sonstige Energieversorgungsvorrichtung auf. Die Einsatzdauer des manuell betätigbaren Eingabeelements unterliegt von daher keinen Beschränkungen.

Durch die manuell, beispielsweise mittels Tastendruck, bewirkte Veränderung des Zustands des Eingabeelements wird in bevorzugter Ausgestaltung die Schwingfrequenz eines Schwingkreises geändert. Als Sensor ist hierbei eine Sende- und Empfangseinheit vorgesehen, durch welche eine drahtlose Abfrage des Zustands des Eingabeelements erfolgt. Der in das Eingabeelement integrierte Schwingkreis ist als RLC-Kombination (Widerstands-Induktivitäts-Kapazitäts-Kombination) ausgebildet, wobei der gesamte Schwingkreis mittels eines Schalters geschlossen oder geöffnet werden kann und/oder mindestens eines der Bauteile Widerstand, Induktivität und Kondensator verstellbar ist. Im letztgenannten Fall sind nicht nur Ein/Aus-Informationen übermittelbar, sondern analoge Werte innerhalb eines Intervalls möglicher Werte übertragbar. In jedem Fall wird das Auslesen der Werte von der Auswerteeinheit aus initiiert. Das Eingabeelement sendet bei dessen Betätigung aktiv kein Signal, etwa Funksignal, an das Auswertesystem. Vielmehr wird eine geänderte Eigenschaft des Eingabeelements durch vom Auswertesystem ausgehende wiederkehrende Abfragen sehr zeitnah, nämlich ohne erkennbare Verzögerung, das heißt in Echtzeit, erfasst und in ein elektrisches Signal umgesetzt.

Das Schwingungsverhalten des Schwingkreises ist vorzugsweise durch einen Schwingquarz unterstützt und/oder stabilisiert. Der Schwingkreis umfasst eine beliebige Anzahl an Widerständen, Kondensatoren und Spulen, mindestens jedoch einen Kondensator und eine Spule. Das Auslesen des Zustands des Eingabeelements beruht auf elektromagnetischer Induktion: Das einen Sender umfassende Auswertesystem sendet ein elektromagnetisches Feld aus, welches das Eingabeelement erreicht, wobei es sich grundsätzlich um ein statisches Feld oder ein Wechselfeld handeln kann. Wird durch das Feld der in das Eingabeelement eingebaute Schwingkreis angeregt, so ist das erzwungene Mitschwingen des Schwingkreises wiederum durch das Auswertesystem, welches hierzu einen Empfänger aufweist, detektierbar. Das Auswertesystem ist in der Lage, mindestens zwei Zustände des Eingabeelements zu identifizieren.

Alternativ zum Schwingkreis ist das schwingfähige System bevorzugt zur Erzeugung einer akustischen Schwingung geeignet. Das schwingfähige System kann hierbei z.B. ein mechanisch oder elektromechanisch zum Schwingen anregbares Element aufweisen (Stimmzunge, Schwinggabel, Piezoelement), welches beim betätigen des Eingabeelements in Schwingung versetzt wird.

Gemäß einer bevorzugten Variante ist der Sensor zum Detektieren der akustischen Schwingung, insbesondere nach Art eines Mikrophons ausgebildet. Hierbei umfasst das schwingfähige System vorzugsweise ein Schwingelement, insbesondere eine Stimmzunge, die mittels eines mechanischen Auslösers betätigbar ist. Durch einen Tastendruck des Eingabeelements wird die Stimmzunge angeschaltet, beginnt zu Schwingen und klingt nach kurzer Zeit ab. Dabei sendet sie ein akustisches Signal einer bestimmten Frequenz aus, welches vom Mikrophon detektiert wird. Die Frequenz kann im Hörbereich des Menschen oder auch außerhalb des Hörbereichs liegen. Die Stimmzunge kann z.B. aus Kunststoff oder aus Metall ausgebildet sein. Die Frequenz der Stimmzunge kann auf mehrere Weisen verändert werden, z.B. durch einen veränderbaren Abgriff, durch ein veränderbares Gewicht oder durch eine veränderbare Länge im Schwingungsverhalten.

Damit das Schwingsignal des Schwingelements problemlos den Sensor erreicht, ist bevorzugt zwischen dem Eingabeelement und dem Auswertesystem ein Trennmedium vorgesehen, welches in der Lage ist akustische Schwingungen zu übertragen. Das Trennmedium kann z.B. eine Trennwand oder Scheibe aus Plexiglas, Kunststoff, Glas oder Metall sein. Das Material muss allerdings mechanische Schwingungen zumindest teilweise hindurch lassen oder weiterleiten, es muss also Körperschall leiten können. Durch die Trennwand wird das Auswertesystem von den Umgebungseinflüssen geschützt.

Nach einer bevorzugten Ausgestaltung ist das Eingabeelement hermetisch von der Außenwelt abgekapselt und somit insbesondere resistent gegen Einflüsse durch Schmutz, Wasser und Chemikalien. Die Ummantelung des in diesem Fall als Kapselschalter bezeichneten Eingabeelements wird jedoch im für die Funktion der Schalt- und Eingabevorrichtung notwendigen Umfang von elektromagnetischen Feldern durchdrungen. Entsprechendes gilt für gegebenenfalls zwischen dem Eingabeelement und dem Auswertesystem angeordnete Barrieren, beispielsweise aus Glas, Wasser, Plexiglas, Gipskarton, Kunststoff und/oder Beton.

In der hermetisch abgedichteten wie in allen sonstigen Ausgestaltungen des Eingabeelements ist dessen Betätigung vorzugsweise haptisch erfassbar. Das Eingabeelement weist hierzu ein durch manuelle Betätigung unter Krafteinwirkung verstellbares Teil auf, welches beispielsweise unmittelbar das Schließen beziehungsweise Öffnen des elektrischen Schwingkreises bewirkt.

Nach einer vorteilhaften Weiterbildung sind mehrere Eingabeelemente zu einem Array zusammengefasst, wobei jedem Eingabeelement eine Schwingungsfrequenz oder ein Schwingungsfrequenzbereich zugeteilt ist. Zur Detektion des Zustands der einzelnen Eingabeelemente können einzelne, jeweils einem bestimmten Eingabeelement zugeordnete Auswerteeinheiten vorgesehen sein. Ebenso ist eine beliebige Zusammenfassung von Auswerteeinheiten, bis hin zu einer einzigen Auswerteeinheit für sämtliche Eingabeelemente, realisierbar. Hierbei sind die Schwingungsfrequenzen der einzelnen Eingabeelemente derart gewählt, dass der Schaltzustand aller Eingabeelemente gleichzeitig durch das Auswertesystem abfragbar bzw. erfassbar ist.

Sollen beispielsweise 12 Eingabeelemente vorgesehen sein, so bietet sich an, die Schwingfrequenzen der einzelnen schwingfähigen Elemente gemäß einer Oktave beim Klavier zu vergeben. Somit liegt jeder Schwingkreis oder jede Stimmzunge 1/12 Oktave von seinem Nachbarn entfernt. Auf diese Weise ist jedes schwingfähige Element eindeutig identifizierbar. Eine Vereinfachung dieser Ausführungsform kann daraus bestehen, dass in Abhängigkeit der Druckstärke, mit der das Eingabeelement betätigt wurde, das schwingfähige Element leiser oder lauter schwingt. Die Stärke seines Schwingens enthält folglich die Information über den Betätigungsdruck.

Der Vorteil der Erfindung liegt insbesondere darin, dass eine kabellose Schalt- und Eingabevorrichtung ein mechanisch betätigtes, eine haptische Rückmeldung gebendes Eingabeelement aufweist, welches keinerlei eigene Energieversorgung benötigt und sich damit durch eine besonders hohe Zuverlässigkeit auszeichnet. Schalt- und Tastimpulse sind insbesondere durch eine geschlossene Oberfläche, beispielsweise eine Trennwand, hindurch übertragbar.

Nachfolgend werden mehrere Ausführungsbeispiele der Erfindung anhand einer Zeichnung näher erläutert. Hierin zeigen:
- FIG 1: ein erstes Ausführungsbeispiel einer kabellosen Schalt- und Eingabevorrichtung,
- FIG 2: ein Eingabeelement der Schalt- und Eingabevorrichtung nach FIG 1,
- FIG 3: das Eingabeelement nach FIG 2 in betätigtem Zustand,
- FIG 4: ein zweites Ausführungsbeispiel einer kabellosen Schalt- und Eingabevorrichtung,
- FIG 5: ein Eingabeelement der Schalt- und Eingabevorrichtung nach FIG 4,
- FIG 6: das Eingabeelement nach FIG 5 in betätigtem Zustand,
- FIG 7: ein weiteres Ausführungsbeispiel einer kabellosen Schalt- und Eingabevorrichtung, und
- FIG 8: in einem Diagramm den zeitlichen Verlauf verschiedener Signale sowie eines Schaltzustands bei der Durchführung des erfindungsgemäßen Verfahrens.

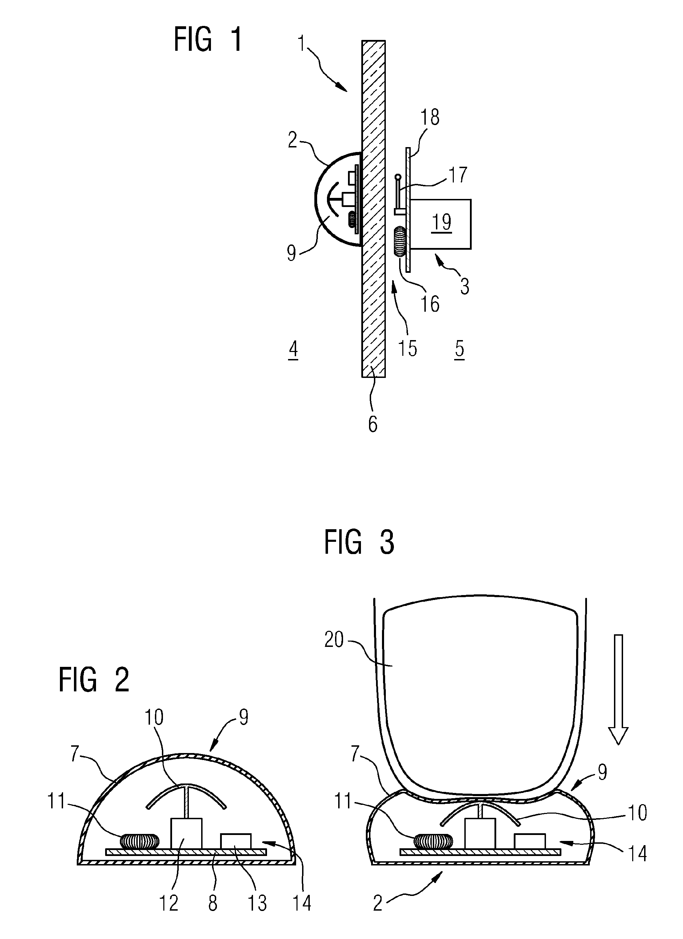

Eine in den Figuren 1 bis 3 dargestellte Schalt- und Eingabevorrichtung 1 setzt sich aus einem manuell betätigbaren Eingabeelement 2 und einem Auswertesystem 3 zusammen. Mögliche Einsatzbereiche der Schalt- und Eingabevorrichtung 1 sind beispielsweise Großküchen, U-Bahnstationen, Wasserbecken und Produktionsanlagen. In jedem dieser Fälle sei ein unreiner Umgebungsbereich 4 von einem reinen Umgebungsbereich 5 zu unterscheiden. Im unreinen Umgebungsbereich 4 sind beispielsweise für elektrische Geräte typischerweise schädliche Umwelteinflüsse durch Staub, Dampf, Schmutz oder Wasser vorhanden. Der sogenannte reine Umgebungsbereich 5, in welchem derartige Umwelteinflüsse nicht zu erwarten oder zumindest erheblich geringer als im unreinen Umgebungsbereich 4 sind, ist von dem unreinen Umgebungsbereich 4 durch eine Barriere oder Trennwand 6, beispielsweise eine Glasplatte, allgemein als Trennmedium bezeichnet, getrennt. Auf der Barriere 6 ist das Eingabeelement 2 der Schalt- und Eingabevorrichtung 1, im unreinen Umgebungsbereich 4 befindlich, zum Beispiel durch Klebung befestigt. Auf der dem Eingabeelement 2 gegenüberliegenden Seite der Barriere 6 befindet sich das Auswertesystem 3. Abweichend von der Anordnung nach Figur 1 ist es jedoch auch möglich, das Eingabeelement 2 ohne Kontakt zur Barriere 6 an anderer Stelle des unreinen Umgebungsbereichs 4 zu platzieren.

Das Eingabeelement 2 gemäß FIG 1, ein sogenannter "tuned switch", weist eine hermetisch dichte, insbesondere wasser- und gasdichte Umhüllung 7, beispielsweise aus Gummi, auf. Innerhalb der Umhüllung 7 befinden sich auf einer Platine 8 mechanische und elektrische Komponenten, nämlich ein Schalter 9 mit einem beweglichen Teil 10 sowie diverse Elektronikkomponenten. Im Einzelnen handelt es sich hierbei um eine Spule 11, einen Widerstand 12 und einen Kondensator 13, welche einen Schwingkreis 14, allgemein als schwingfähiges System oder Schaltung bezeichnet, bilden. Wie aus FIG 2 ersichtlich, wirkt das im dargestellten Ausführungsbeispiel in Form einer verschiebbaren Schalterkappe ausgebildete bewegliche Teil 10, welches senkrecht zur Platine 8 gegen Federkraft betätigbar ist, direkt mit dem hier als Potentiometer ausgebildeten Widerstand 12 zusammen.

Die Eigenfrequenz des Schwingkreises 14 ist durch Verstellung des Widerstandes 12, bewirkt durch Niederdrücken des von außen betätigbaren Teils 10 (FIG 3), veränderbar. Abweichend hiervon ist in einer vereinfachten Ausführungsform der Schalter 9 in Form eines Tasters lediglich zum Schließen und Öffnen des Schwingkreises 14 vorgesehen. In nicht dargestellter Weise kann der Schalter 9 auch mit der Spule 11 oder mit dem Kondensator 13 zusammenwirken, so dass sich bei Betätigung des Schalters 9 die Induktivität beziehungsweise Kapazität des Schwingkreises 14 ändert. Auch in diesen Fällen weist der Schwingkreis 14 eine kontinuierlich durchstimmbare Eigenfrequenz auf, die eindeutig der Schalterstellung zuzuordnen ist. Beispielsweise ist es damit möglich, im Fall einer Lautstärkeeinstellung den vom Schalter 9 einnehmbaren Positionen die Lautstärke 0 % bis 100 % zuzuordnen.

Unabhängig davon, ob das Eingabeelement 2 als Null/Eins-Schalter oder als Stellschalter mit kontinuierlichem Stellbereich fungiert, wird der Zustand des Eingabeelements 2 mittels des Auswertesystems 3 drahtlos abgefragt. Das Auswertesystem 3 weist hierzu einen Sensor nach Art einer Sende- und Empfangseinheit 15 mit einem Sendeelement 16 und einem Empfangselement 17 auf, welche auch als einziges Sende-/Empfangselement ausgebildet sein können. Das Sendeelement 16 und das Empfangselement 17 befinden sich auf der der Barriere 6 zugewandten Seite einer Platine 18, während sich auf der anderen Seite der Platine 18 eine die Sende- und Empfangselemente 16,17 ansteuernde Steuerungseinheit 19 befindet.

Beim Betrieb der Schalt- und Eingabevorrichtung 1 erzeugt das Sendeelement 16 ein elektromagnetisches Feld mit festgelegter Feldstärke. Sind die Parameter des Schwingkreises 14 geeignet eingestellt, nämlich durch geeignete Einstellung des Schalters 9, im einfachsten Fall durch Tastendruck, so wird der Schwingkreis 14 zum Schwingen angeregt. Dieses Schwingen ist auf verschiedene Arten mittels des Empfangselements 17 sowie der mit diesem zusammenwirkenden Steuerungseinheit 19 auswertbar: Nach einem ersten Auswerteverfahren wird das Mitschwingen des Schwingkreises 14 mit dem von dem Sendeelement 16 ausgestrahlten Feld, auch als Suchsignal bezeichnet, dadurch detektiert, dass der Schwingkreis 14 dem Suchsignal Energie entzieht. Nach einem zweiten Auswerteverfahren wird vom Sendeelement 16 ein Suchsignal festgelegter Dauer ausgesendet und anschließend die vom Schwingkreis 14 ausgehende elektromagnetische Strahlung, sofern dieser zum Schwingen angeregt wurde, gemessen.

Ist der Schalter 9 als Taster ausgebildet, wie im Ausführungsbeispiel nach den Figuren 1 bis 3, so wird in vorteilhafter Weise nicht nur abgefragt, ob eine Betätigung des Tasters 9 feststellbar ist, sondern darüber hinaus auch eine Information über die Art der Betätigung gewonnen. Dies ist dadurch ermöglicht, dass je nach Geschwindigkeit und Kraft, mit der der Schalter 9 niedergedrückt wird, die Schwingungseigenschaften des Schwingkreises 14 in unterschiedlicher Weise beeinflusst werden. Wird durch Betätigung des Schalters 9 beispielsweise die Ausgabe eines akustischen Signals ausgelöst, so kann die Lautstärke dieses Signals davon abhängig gemacht werden, wie schnell und/oder wie kraftvoll der Schalter 9 betätigt wird.

Zur Betätigung des Eingabeelements 2, das heißt zur Veränderung dessen elektrischer Eigenschaften mittels manueller Änderung der Positionierung des Teils 10, ist in jedem Fall eine Kraft aufzuwenden. Diese Kraft wird, wie in FIG 3 dargestellt, vom Bediener der Schalt- und Eingabevorrichtung 1 durch Druck mit einem Finger 20 aufgebracht. Beim Drücken des Schalters 9 erzeugt das Eingabeelement 2 eine auf den Finger 20 wirkende Gegenkraft, die der Bediener als haptische Rückmeldung wahrnimmt. Diese haptische Rückmeldung ist gegeben, obwohl die von der Steuerungseinheit 19 detektierte Eingabe durch die geschlossene, nicht nachgiebige Barriere 6 hindurch erfolgt. Von besonderem Vorteil ist, dass das kritischen Umwelteinflüssen ausgesetzte Eingabeelement 2 keine aktiven, einen Anschluss an eine Spannungsversorgung benötigenden elektrischen oder elektronischen Komponenten enthält.

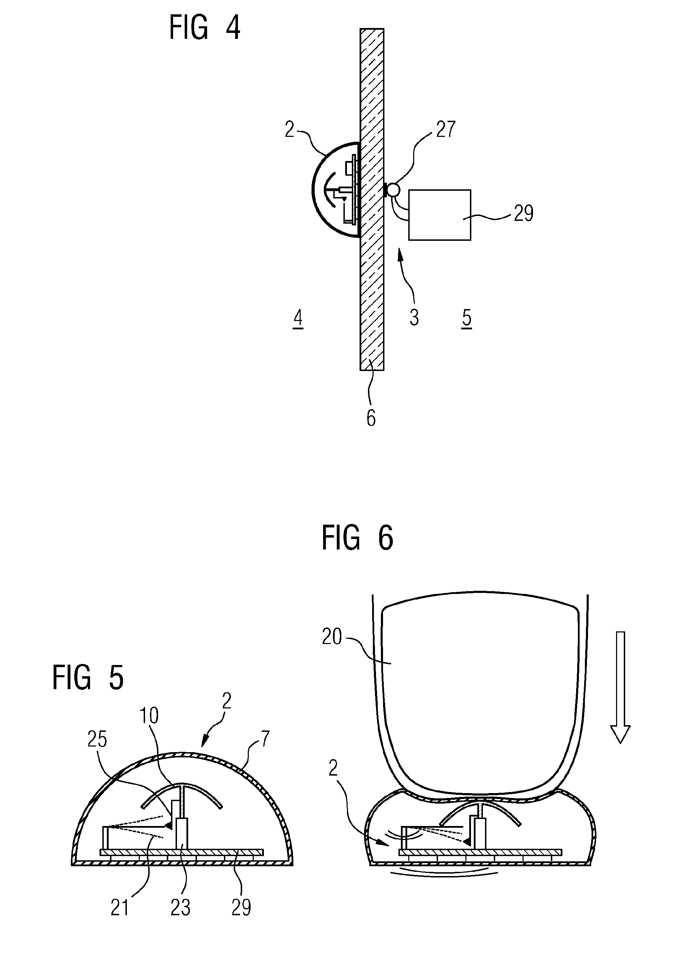

In FIG 4 bis 6 ist ein weiteres Ausführungsbeispiel einer kabellosen Schalt- und Eingabevorrichtung, ein s.g. "clicking switch" dargestellt. Die Umhüllung 7 schützt die darin befindliche Mechanik des Eingabeelements 2, die auf der Platine 8 angeordnet ist. Die Mechanik umfasst ebenfalls ein schwingfähiges Element, in diesem Fall eine Stimmzunge 21 sowie ein federndes Element 23, welches das Teil 10 nach Betätigung zurückstellt und einen Dorn 25, der bei Betätigung des Tasters die Stimmzunge 21 anregt und sie zum Schwingen bringt. Weiterhin kann der durch das federnde Element 23 dargestellte Rückstellmechanismus dafür sorgen, dass die Betätigung des "clicking switch" ein haptisch angenehmes Gefühl beim Benutzer erzeugt.

FIG 4 zeigt exemplarisch wie eine kabellose Schalt- und Eingabevorrichtung aufgebaut ist. Die Trennwand 6 ist in diesem Ausführungsbeispiel wasserdicht, aber teilweise oder gänzlich durchlässig für mechanische Schwingungen. Das Auswertesystem 3 besteht zum einen Teil aus einem Sensorelement, hier ein Mikrophon 27. Zum anderen Teil sind auf einer weiteren Platine 29 die einzelnen Elemente des Auswertesystems 3 montiert.

In der FIG 6 ist der "clicking switch" in Aktion gezeigt. Der Finger 20 drückt auf das Eingabeelement 2, wobei die Umhüllung 7 so nieder gedrückt wird, dass der Dorn 25 die Stimmzunge 21 anregt. Die dabei ausgelösten Schwingungen der Stimmzunge 21 wandern beispielsweise als Körperschall aus der Umhüllung 7 in die Barriere oder Trennwand 6. Nach Beendigung des Vorganges geht die Umhüllung 7 in den Ausgangszustand zurück. Die Stimmzunge 21 kann bis dahin schon ausgeklungen sein.

Das Eingabeelement 2 ist an der Trennwand 6 befestigt, beispielsweise ist die Trennwand 6 eine Glasscheibe und das Eingabeelement 2 wird darauf geklebt. Auf der anderen Seite der Glasscheibe 6 wird das Auswertesystem 3 angebracht. Das Auswertesystem lauscht permanent oder in einem zeitlichen Muster, ob ein Klick-Geräusch des Teils 10 gehört werden kann. Wird das Eingabeelement 2 bzw. das Teil 10 betätigt, so sendet er einen kurzen Tonimpuls aus. Dabei handelt es sich um eine abklingelnde Schwingung, die durch die mechanische Betätigung ausgelöst worden ist. Diese abklingelnde Schwingung wird auf die Trennwand oder Glasscheibe 6 übertragen, weil das Eingabeelement 2 an der Glasscheibe 6 befestigt ist. Das hinter der Glasscheibe 6 sitzende Mikrophon 27 erkennt diese abklingelnde Schwingung und bewertet sie als eine Betätigung des Eingabeelements (2).

Das Eingabeelement 2 gemäß FIG 4 bis 6 ist ebenfalls wie beim vorangegangen Ausführungsbeispiel nach Art eines Tasters ausgebildet. Durch ein passendes Schaltelement lässt sich auch die Funktion eines Joysticks oder Wahlschalters realisieren.

Die kabellose Schalt- und Eingabevorrichtung 1 eignet sich überall dort gut, wo preiswerte Eingaben gemacht werden müssen. Als Beispiel kann sie bei Schaufenster mit wählbaren Werbebotschaften, Schwimmbäder der Solarien eingesetzt werden. Auch im industriellen Umfeld kann eine solche Eingabevorrichtung 1 immer dann Vorteile bringen, wenn zwischen einem sauberen und einem schmutzigen Bereich getrennt werden muss. Weiterhin kann die Eingabevorrichtung 1 in Operationssäulen, also im der Medizintechnik oder in Industrieanlagen Anwendung finden.

Als mögliches Anwendungsbeispiel ist die Werbetechnik genannt. Werbung auf der Basis von interaktiven Videos oder HTML Animationen durch ein Schaufenster hindurch haben immer das Problem der Steuerung. Einerseits muss bei einer Werbung alles sehr preiswert sein, andererseits hat Schaufensterwerbung mit bewegten Bildern einen großen Reiz. Hier kann das kabellose Eingabeelement 2 eine Brücke bauen. Teuere Komponenten wie TFT-Schirme können im Schaufenster sicher und unbehelligt stehen. An der Schaufensterscheibe kleben lediglich ein kleines Mikrophon und eine Auswerteelektronik. Vor der Scheibe befindet sich ein Zuseher, der mittels z.B. der preiswerten "clicking switches" die Darstellung steuern kann. Dabei werden die Eingabeelemente 2 direkt auf die Scheibe geklebt. Sollten Eingabeelemente 2 defekt oder zerstört werden, klebt man einfach ein neues an die Stelle des alten. Vorteilhaft ist auch, dass die Eingabeelemente 2 auch ins TFT-Bild geklebt werden können und somit in die interaktive Präsentation mit eingeschlossen sind.

Der wesentliche Vorteil der kabellosen Schalt- und Eingabevorrichtung nach dem Prinzip der akustischen Schwingung sind ihre niedrigen Produktionskosten. Während die Sensoren, beispielsweise Elektromikrophone im zweistelligen Centbereich liegen, können die Schwingelemente (21) aus Kunststoff gefertigt werden und somit die Mikrophonkosten deutlich unterschreiten.

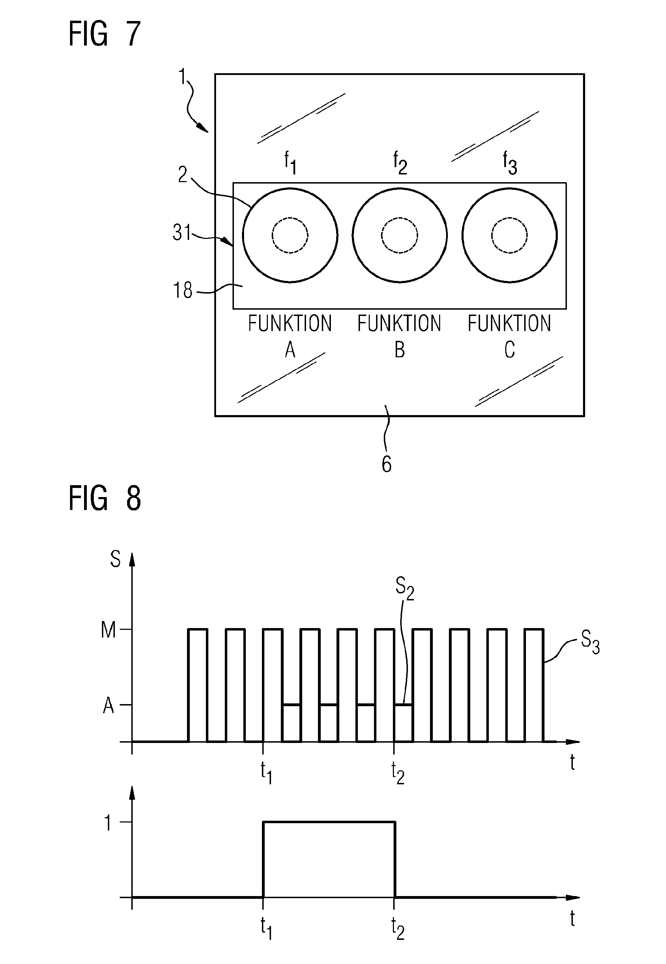

Im Ausführungsbeispiel nach FIG 7 sind mehrere Eingabeelemente 2, die nach Art "tuned switches" ausgebildet sind, zu einem Array 31 gruppiert. Eine ähnliche Anordnung lässt sich allerdings auch mit Hilfe der "clicking switches" realisieren. Jedem Eingabeelement 2 ist eine spezifische Funktion (Funktionen A,B,C) zugeordnet. Wie im Ausführungsbeispiel nach den Figuren 1 bis 6 befinden sich die Eingabeelemente 2 vor einer Barriere 6, welche in diesem Fall semitransparent ist. Durch die Barriere 6 hindurch ist die Platine 18 des Auswertesystems 3 erkennbar.

Zur Abfrage der Schaltzustände der drei Eingabeelemente 2 ist lediglich eine einzige Steuerungseinheit 19 vorgesehen. Um eine Unterscheidung der drei Funktionen A,B,C, welche fest jeweils einem Eingabeelement 2 zugeordnet sind, zu ermöglichen, arbeitet die Sende- und Empfangseinheit 15 des Auswertesystems 3 mit drei unterschiedlichen Ansprechfrequenzen f₁,f₂,f₃. Jede dieser Ansprechfrequenzen f₁,f₂,f₃ ist auf das Eigenschwingverhalten eines bestimmten Eingabeelements 2 abgestimmt. Beispielsweise ist die höchste Ansprechfrequenz f₃ doppelt so hoch wie die niedrigste Ansprechfrequenz f₁. Die Ansprechfrequenzen f₁,f₃ liegen damit genau eine Oktave auseinander. Abweichend von der vereinfachten Darstellung nach FIG 7 ist es auch möglich, den Frequenzbereich innerhalb einer Oktave feiner aufzuteilen. So kann ein Array 31 beispielsweise zwölf Eingabeelemente 2 umfassen, denen jeweils eine spezifische Funktion entspricht. Jeder der zwölf Funktionen wird eine Frequenz innerhalb eines Frequenzintervalls von einer Oktave zugeordnet, so dass die einzelnen Frequenzen, welche als Ansprechfrequenzen f₁,f₂,... vom Auswertesystem 3 genutzt werden und zugleich die Eigenfrequenzen der zwölf Schwingkreise 14 sind, jeweils ein Zwölftel einer Oktave auseinander liegen. Dies ist ausreichend, um bei Betätigung eines Eingabeelements 2 dieses mittels des Auswertesystems 3 eindeutig zu identifizieren. Vorzugsweise werden alle zwölf Ansprechfrequenzen f₁,f₂,... gleichzeitig abgestrahlt, das heißt alle Eingabeelemente 2 des Arrays 31 zeitgleich ausgelesen.

Der zeitliche Ablauf des Auslesens des diskret verstellbaren Schaltzustands eines Eingabeelements 2 ist in FIG 8 veranschaulicht. Zu einem ersten Zeitpunkt t₁ wird das Eingabeelement 2 per Tastendruck betätigt und damit der Schaltzustand "1" hergestellt. Dieser Schaltzustand dauert bis zum zweiten Zeitpunkt t₂ an. Der Schwingkreis 14 ist nur im Schaltzustand "1" geschlossen.

Unabhängig davon, ob das Eingabeelement 2 betätigt ist, das heißt der Schwingkreis 14 geschlossen ist, wird vom Auswertesystem 3 ein intermittierendes Suchsignal S₃ ausgesendet. Die Signalstärke S des Suchsignals S₃ weist in dem vereinfachten Beispiel nach FIG 8 einen exakt rechteckförmigen Verlauf mit einem Maximalwert M auf.

Solange der Schwingkreis 14 geöffnet ist, bleibt das Suchsignal S₃ ohne detektierbare Auswirkung auf das Eingabeelement 2. Erst mit der manuellen Betätigung des Eingabeelementes 2, das heißt mit der haptisch erfassbaren Verlagerung des Teils 10 innerhalb der Umhüllung 7, wird der Schwingkreis 14 durch das Suchsignal S₃ zum Schwingen angeregt und sendet dadurch ein mittels der Auswerteeinheit 3 messbares Antwortsignal S₂ aus. Dieses Antwortsignal S₂, in FIG 8 vereinfachend mit einer konstanten Antwortsignalstärke A dargestellt, wird mit Hilfe der Steuerungseinheit 19 in ein elektrisches Signal gewandelt, welches drahtgebunden oder drahtlos weitergeleitet wird.

## Patentansprüche

1. Kabellose Schalt- und Eingabevorrichtung, mit einem Eingabeelement (2) und einem von diesem galvanisch getrennten Auswertesystem (3), **dadurch gekennzeichnet, dass** das Auswertesystem (3) einen Sensor (15, 27) aufweist, welcher dafür ausgebildet ist, einen manuell verstellbaren Zustand des Eingabeelements (2) zu detektieren.

2. Kabellose Schalt- und Eingabevorrichtung nach Anspruch 1, **dadurch gekennzeichnet, dass** das Eingabeelement (2) ein schwingfähiges System (14, 21) aufweist.

3. Kabellose Schalt- und Eingabevorrichtung nach Anspruch 1 oder 2, **dadurch gekennzeichnet, dass** das schwingfähige System (14, 21) dafür ausgebildet ist, durch Betätigung des Eingabeelements (2) zu schwingen.

4. Kabellose Schalt- und Eingabevorrichtung nach einem der Ansprüche 1 bis 3, **dadurch gekennzeichnet, dass** das Eingabeelement (2) keine eigene Energieversorgungsvorrichtung aufweist.

5. Kabellose Schalt- und Eingabevorrichtung nach einem der vorhergehenden Ansprüche, dass das schwingfähige System (14, 21) ein als Widerstands-Induktivitäts-Kapazitäts-Kombination ausgebildeten Schwingkreises (14) ist und durch manuelle Verstellung des Zustands des Eingabeelements (2) eine Änderung der Schwingfrequenz des Schwingkreises (14) vorgesehen ist.

6. Kabellose Schalt- und Eingabevorrichtung nach Anspruch 5, **dadurch gekennzeichnet, dass** der Sensor (15, 27) eine Sende- und Empfangseinheit (15) zur Erfassung der Schwingfrequenz des Schwingkreises umfasst.

7. Kabellose Schalt- und Eingabevorrichtung nach Anspruch 6, **dadurch gekennzeichnet, dass** das Eingabeelement (2) einen zum Schließen des Schwingkreises (14) vorgesehenen Schalter (9) umfasst.

8. Kabellose Schalt- und Eingabevorrichtung nach Anspruch 6, **dadurch gekennzeichnet, dass** das Eingabeelement (2) einen zur Änderung der Schwingfrequenz des Schwingkreises (14) vorgesehenen verstellbaren Widerstand (12) umfasst.

9. Kabellose Schalt- und Eingabevorrichtung nach Anspruch 6, **dadurch gekennzeichnet, dass** das Eingabeelement (2) einen zur Änderung der Schwingfrequenz des Schwingkreises (14) vorgesehenen verstellbaren Kondensator (13) umfasst.

10. Kabellose Schalt- und Eingabevorrichtung nach Anspruch 6, **dadurch gekennzeichnet, dass** das Eingabeelement (2) eine zur Änderung der Schwingfrequenz des Schwingkreises (14) vorgesehene verstellbare Induktivität (11) umfasst.

11. Kabellose Schalt- und Eingabevorrichtung nach einem der Ansprüche 6 bis 10, **dadurch gekennzeichnet, dass** der Schwingkreis (14) einen zur Unterstützung und/oder Stabilisierung dessen Schwingungsverhaltens vorgesehenen Quarz umfasst.

12. Kabellose Schalt- und Eingabevorrichtung nach einem der Ansprüche 1 bis 11, **gekennzeichnet durch** ein zwischen dem Eingabeelement (2) und dem Auswertesystem (3) angeordnetes, für elektromagnetische Felder zumindest teilweise durchlässiges Trennmedium (6).

13. Kabellose Schalt- und Eingabevorrichtung nach einem der Ansprüche 1 bis 12, **dadurch gekennzeichnet, dass** eine manuelle Verstellung des Zustands des Eingabeelements (2) mit einer kontinuierlichen, mittels des Auswertesystems (3) detektierbaren Änderung elektrischer Eigenschaften gekoppelt ist.

14. Kabellose Schalt- und Eingabevorrichtung nach einem der Ansprüche 1 bis 4, **dadurch gekennzeichnet, dass** das schwingfähige System (14, 21) zur Erzeugung einer akustischen Schwingung geeignet ist.

15. Kabellose Schalt- und Eingabevorrichtung nach einem der Ansprüche 1 bis 4 und 14, **dadurch gekennzeichnet, dass** der Sensor (15, 27) zum Detektieren von der akustischen Schwingung insbesondere nach Art eines Mikrophons (27) ausgebildet ist.

16. Kabellose Schalt- und Eingabevorrichtung nach einem der Ansprüche 1 bis 4 und 14 oder 15, **dadurch gekennzeichnet, dass** das schwingfähiges System (14, 21) ein zum Schwingen anregbares Schwingelement, insbesondere eine Stimmzunge (21) umfasst, das mittels eines mechanischen Auslösers (25) betätigbar ist.

17. Kabellose Schalt- und Eingabevorrichtung nach einem der Ansprüche 1 bis 4 und 14 bis 16, **dadurch gekennzeichnet, dass** zwischen dem Eingabeelement (2) und dem Auswertesystem (3) ein Trennmedium (6) vorgesehen ist, welches in der Lage ist akustische Schwingungen zu übertragen.

18. Kabellose Schalt- und Eingabevorrichtung nach einem der vorhergehenden Ansprüche, **gekennzeichnet durch** eine hermetische, insbesondere wasserdichte, Umhüllung (7) des Eingabeelements (2).

19. Kabellose Schalt- und Eingabevorrichtung nach einem der vorhergehenden Ansprüche, **gekennzeichnet durch** mehrere zu einem Array (31) zusammengefasste Eingabeelemente (2).

20. Kabellose Schalt- und Eingabevorrichtung nach Anspruch 19, **dadurch gekennzeichnet, dass** ein einziges Auswertesystem (3) zur Zusammenwirkung mit sämtlichen Eingabeelementen (2) des Arrays (31) ausgebildet ist, wobei den einzelnen Eingabeelementen (2) jeweils ein spezifischer Schwingungsfrequenzbereich zugeordnet ist.

21. Kabellose Schalt- und Eingabevorrichtung nach einem der vorhergehenden Ansprüche, **dadurch gekennzeichnet, dass** das Eingabeelement (2) ein bewegliches, manuell verstellbares Teil (10) umfasst, dessen Schaltzustand durch das Auswertesystem (3) detektierbar ist.

22. Verfahren zur Detektion des Schaltzustands eines Eingabeelements (2), mit folgenden Merkmalen:
- das Eingabeelement (2) umfasst ein schwingfähiges System (14, 21), welches bei einer Betätigung des Eingabeelements (2) in Schwingung versetzt wird, und
- die Schwingung von einem vom Eingabeelement (2) galvanisch getrennten Auswertesystem (3) erfasst und in ein elektrisches, drahtgebunden oder drahtlos weiterleitbares Signal umgesetzt wird.

23. Verfahren nach Anspruch 22, bei dem:
- vom Auswertesystem (3) ein elektromagnetisches Suchsignal (S₃) ausgesendet wird,
- mittels des Suchsignals (S₃) ist einer ansonsten keine Energieversorgung aufweisenden, im Eingabeelement (2) angeordneten Schaltung (14) Energie zuführbar,
- die Energiezufuhr zur Schaltung (14) ist abhängig von der Positionierung eines im Eingabeelement (2) angeordneten, durch manuelle Betätigung des Eingabeelements (2) verlagerbaren Teils (10),
- von der Schaltung (14) ein von der Positionierung des Teils (10) abhängiges elektromagnetisches Antwortsignal (S₂) generiert wird, welches vom Auswertesystem (3) erfasst wird.

24. Verfahren nach Anspruch 23, **dadurch gekennzeichnet, dass** das Suchsignal (S₃) vom Auswertesystem (3) intermitierend ausgesendet wird.

25. Verfahren nach Anspruch 23, **dadurch gekennzeichnet, dass** das Suchsignal (S₃) vom Auswertesystem (3) kontinuierlich ausgesendet wird.

26. Verfahren nach Anspruch 22, **dadurch gekennzeichnet, dass** durch die Betätigung des Eingabeelements (2) eine akustische Schwingung ausgesendet wird, welche vom Auswertesystem (3) erfasst wird.
